# EUROPEAN PATENT APPLICATION

(11) **EP 1 955 910 A1**
(43) Date of publication of application: **13.08.2008**
(21) Application number: 06833130.5
(22) Date of filing: 22.11.2006
(51) Int. Cl.: B60R 21/20

(54) **INTERIOR PANEL ASSEMBLY AND AIRBAG DEVICE**

(30) Priority: 02.12.2005 JP 2005349457
(71) Applicant: TAKATA CORPORATION, Minato-ku, Tokyo 106-8510 (JP)
(72) Inventor: HAYASHI, Shinji, Tokyo; 106-8510 (JP)
(74) Representative: Banzer, Hans-Jörg
(86) International application number: PCT/JP2006/323308
(87) International publication number: WO 2007/063756

(57) **Abstract**

There are provided an interior panel assembly in which concentration of stress on the hinges during inflation of the airbag is prevented and an airbag system equipped with the interior panel assembly. A door frame 50 is fixed to the back of an interior panel 40. When an inflator 63 operates, an airbag 62 starts to inflate. Since the airbag 62 pushes a door portion 44 from the back, tear lines 41 to 43 are torn, so that the door portion 44 is opened while turning to the interior of the car. Since the frame 52 of a door frame 50 has a slit 58 along a leg 54, a hinge 53 is smoothly deformed.

## Description

### Technical Field

The present invention relates to an interior panel assembly and an airbag system mounted for a passenger seat of a car and so on, and more specifically, it relates to an airbag system of the type in which the door portion of the interior panel is opened while turning to the interior when the airbag inflates.

### Background Art

Passenger airbag systems mounted to cars have a folded airbag, a retainer fitted with the airbag, an inflator (gas generator) for inflating the airbag, and a lid or an instrument-panel door disposed in front of the retainer.

When the inflator generates gas, the airbag starts to inflate, so that the lid or the door portion of the instrument panel is torn open along a tear line. Thus, the airbag deploys into the interior of the car, thereby protecting an occupant.

Japanese Unexamined Patent Application Publication No. 2004-161182 discloses an airbag-door support structure in which the door portion of the instrument panel is backed.

Figs. 6 and 7 show the structure described in Figs. 9 and 11 of Japanese Unexamined Patent Application Publication No. 2004-161182, in which tear lines 11, 12, and 13 are provided on the back of an interior panel (in this case, an instrument panel) 10 to form a door portion 14. A door frame 20 is fixed to the back in the vicinity of the door portion 14. The door frame 20 has flaps 21 fixed to the door portion 14, a frame 22 enclosing the flaps 21, hinges 23 connecting the flaps 21 and the frame 22 together, and a leg 24 erecting from the frame 22. The frame 22 is fixed to the back of the interior panel 10 around the door portion 14. The hinges 23 are curved substantially in U-shape, and are apart from the door portion 14 without being fixed thereto.

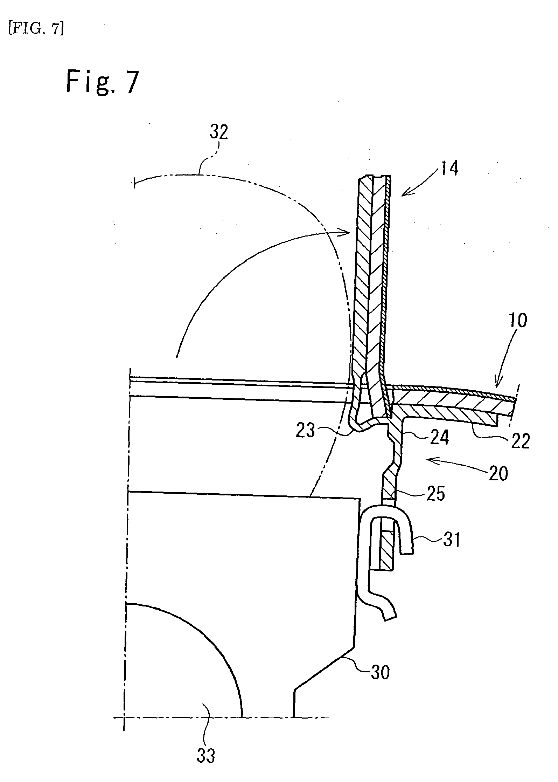

Hooks 31 of a retainer 30 engage with hanger holes 25 of the leg 24. An airbag 32 (see Fig. 7) is housed in the retainer 30 in a folded state, which is inflatable by an inflator 33.

On activation of the inflator, the airbag 32 starts to inflate. When the airbag 32 pushes the door portion 14 from the back, the tear lines 11 to 13 are torn, so that the door portion 14 is opened while turning to the interior, as shown in Fig. 7.
Patent Document 1: Japanese Unexamined Patent Application Publication No. 2004-161182.

In the conventional example, the hinges 23 are drawn when the door portion 14 is opened, on which stress is concentrated.

### Disclosure of Invention

Accordingly, it is an object of the invention to provide an interior panel assembly in which concentration of stress on the hinges at the base of the door portion is prevented and an airbag system equipped with the interior panel assembly.

An interior panel assembly according to a first aspect of the invention includes: an interior panel having a door portion that is turned open to the interior of a vehicle by the pressure of an airbag from the back; and a door frame fixed to the back of the door portion of the interior panel and the periphery thereof. The door frame includes: a flap portion fixed to the door portion; a frame enclosing the flap portion and fixed to the back of the periphery of the door portion of the interior panel; a hinge connecting the flap portion and the frame together, facing the base of the door portion in an open state, and being apart from the base; and a leg erecting from the inner rim of the frame. The frame has a cleaving line of at least one of a slit and a tear line extending along at least part of the leg opposite to the hinge; and the leg has a cleaving-line extending portion connecting to at least one of the ends of the length of the cleaving line.

An airbag system according to a second aspect of the invention includes: the interior panel assembly according to the first aspect; a retainer opposed to the back of the door portion of the interior panel; an airbag housed in the retainer; an inflator for inflating the airbag; and a joint member connecting the retainer and the leg of the door frame together.

### Brief Description of the Drawings

[Fig. 1] Fig. 1 is a longitudinal sectional view of an airbag system according to an embodiment of the invention.
[Fig. 2] Fig. 2 is a sectional view of a hinge.
[Fig. 3] Fig. 3 is a perspective view of a door frame.
[Fig. 4] Fig. 4 is a perspective view of the door frame as viewed from below.
[Fig. 5] Fig. 5 is a sectional view of the vicinity of the hinge, with the door frame in deformed state.

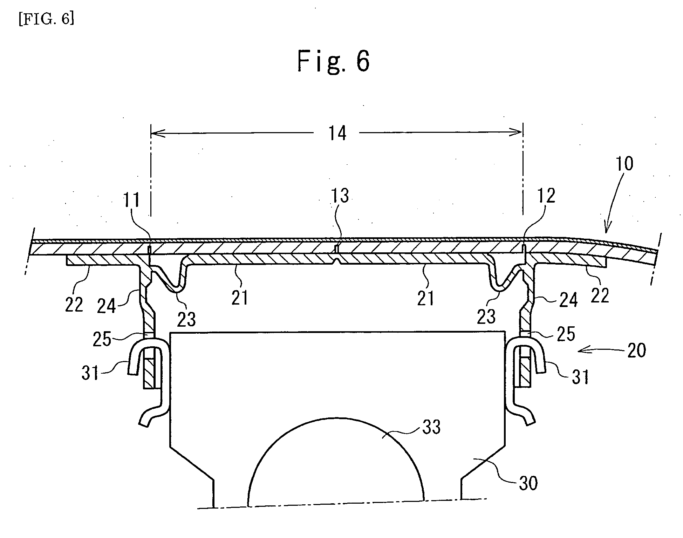

[Fig. 6] Fig. 6 is a sectional view of the structure of a conventional example.
[Fig. 7] Fig. 7 is a sectional view of the structure of the conventional example.

### Best Mode for Carrying Out the Invention

In this invention, the frame of the door frame of the interior panel assembly has a slit or a tear line along at least part of the leg opposite to the hinge.

The tear line is torn when the airbag inflates.

Accordingly, upon inflation of the airbag, the leg, the flap, and the frame are separated and the upper part of the leg (adjacent to the frame) is also deformed together with the hinge. This prevents stress concentration to the hinge.

Since the end of the slit or the tear line extends to the leg, the upper part of the leg is easily deformed when the airbag inflates, preventing concentration of stress.

The present invention will be further illustrated with examples below, with reference to the drawings.

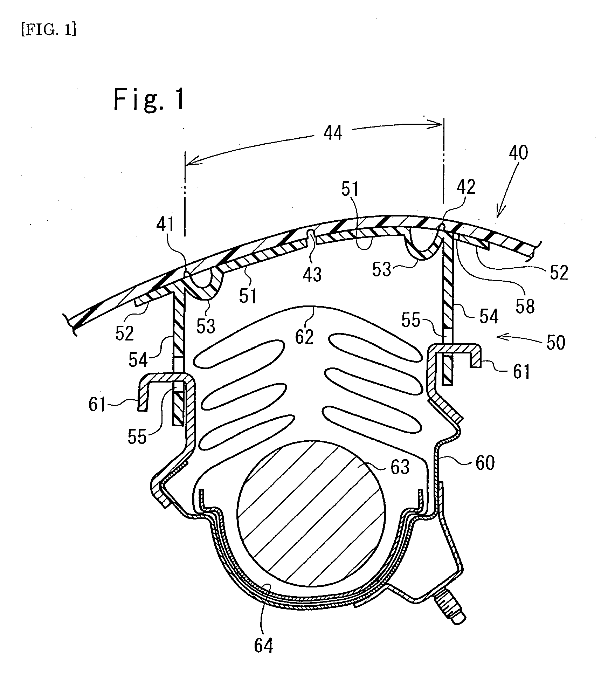

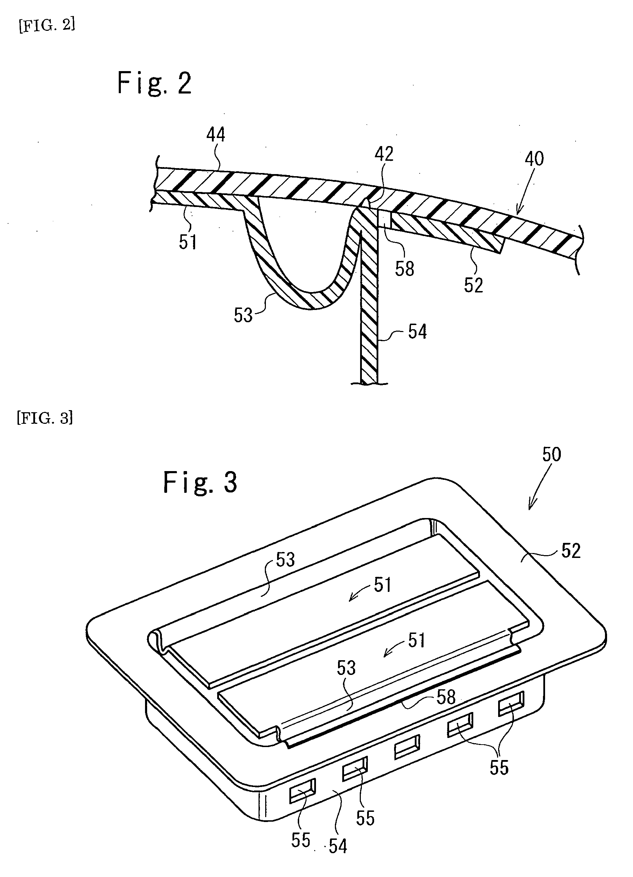

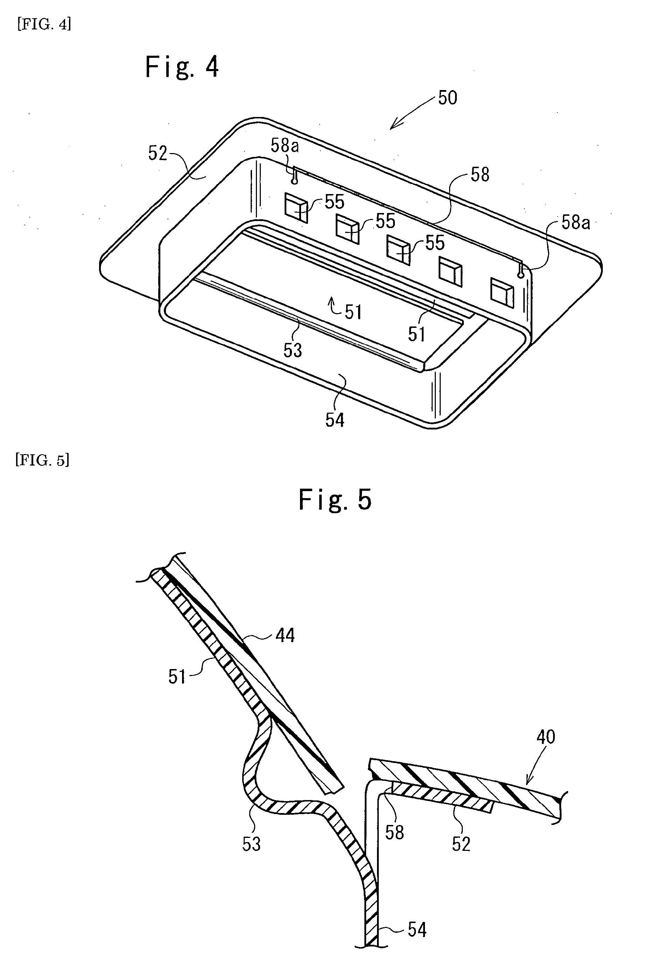

Fig. 1 is a longitudinal sectional view of an airbag system according to an embodiment of the invention; Fig. 2 is a sectional view of a hinge; Fig. 3 is a perspective view of a door frame; Fig. 4 is a perspective view of the door frame as viewed from below; and Fig. 5 is a sectional view of the door frame in a deformed state.

An interior panel (in this case, an instrument panel or a lid) 40 has tear lines 41, 42, and 43 on the back thereof. The tear lines 41 and 42 define a door portion 44. The tear lines 41, 42, and 43 may be grooves.

A door frame 50 is fixed to the back in the vicinity of the door portion 44. The door frame 50 has flaps 51 fixed to the door portion 44, a frame 52 enclosing the flap 51, hinges 53 connecting the flaps 51 and the frame 52 together, and a leg 54 erecting from the inner rim of the frame 52.

The frame 52 is fixed to the back of the interior panel 40 around the door portion 44. The hinges 53 are curved substantially in U-shape, and are apart from the door portion 44 without being fixed thereto.

The part of the frame 52 which extends along the leg 54 and is opposite to the hinge 53 have a slit 58. The slit 58 extends along the full length of the hinge 53. Both ends of the slit 58 extend to the upper part of the leg 55 to form extending portions 58a. While the extending portions 58a are slits extending apart from the frame 52, they may be grooves.

In this embodiment, the extending portions 58a are located in positions that agree with both ends of the length of the hinge 53 adjacent to the occupant. It is preferable that the extending portions 58a are from one fifth to one third of the leg 54 in length.

Although, in this embodiment, the slit 58 is provided only along the hinge 53 of one of the two flaps 51 (opposite to the occupant (adjacent to the windshield)), the slit 58 may be provided along the hinge 53 adjacent to the occupant, or alternatively, the slit 58 may be provide along the hinges 53 of both the occupant-side and windshield-side flaps 51.

Hooks 61 of a retainer 60 engage with hook holes 55 of the leg 54. An airbag 62 is housed in the retainer 60 in a folded state. The airbag 62 is inflatable by an inflator 63. Reference numeral 64 indicates a mounting bracket for mounting the airbag 62 to the retainer 60. The joint structure for the airbag 62 and the retainer 60 is not limited to that.

In this embodiment, the retainer 60 is like a top-open substantially rectangular container, and the leg 54 of the door frame 50 is also shaped like a substantially rectangular frame. The frame 52 expands outwardly like a flange from the entire upper rim of the leg 54.

In the embodiment, two flaps 51 are provided. The bases of the flaps 51 connect to a pair of inner long sides of the frame 52 with the hinges 53. There is some clearance between the edges of the flaps 51. The tear line 43 extends along the clearance.

The tear lines 41 and 42 extend along the bases of the door portion 44 on the back thereof. In this embodiment, the tear lines 41 and 42 are opposed to the inner rim of the frame 52.

The bases of the door portion 44 face the hinges 53, and are apart from the hinges 53 as described above.

The interior panel 40 of this embodiment is made of thermoplastic synthetic resin. The flaps 51, the frame 52, and the hinges 53 are also made of synthetic resin integrated with the leg 54.

In this airbag system, upon activation of the inflator 63, the airbag 62 starts to inflate. The airbag 62 pushes the door portion 44 from the back to tear the tear lines 41 to 43, so that the door portion 44 opens while turning to the interior.

Since the embodiment has the slit 58, the hinge 53 is drawn as shown in Fig. 5 when the door portion 44 and the flap 51 is turned open, and the upper part of the leg 54 is separated from the frame 52 and is deformed inward. The hinge 53 is therefore deformed smoothly without strong interference with the frame 52, so that concentration of stress on the hinge 53 is prevented.

It is to be understood that the foregoing embodiments are merely examples of the invention, and that the invention may adopt another structure. For example, while the embodiments have the slit 58, the invention may have a linear weak portion (tear line) that has the strength that it is broken when the airbag inflates. The tear line may be a groove. It is preferable that the slit or the tear line be provided along the full length of the hinge 53. However, they may be provided along part of the hinge 53. The extending portion may also be a groove.

This application is based on Japanese Patent Application No. 2005-349457 filed in Japan Patent Office on December 2, 2005, the contents of which are hereby incorporated by reference.

## Claims

1. An interior panel assembly comprising:
an interior panel having a door portion that is turned open to the interior of a vehicle by the pressure of an airbag from the back; and
a door frame fixed to the back of the door portion of the interior panel and the periphery thereof, wherein
the door frame includes:
a flap portion fixed to the door portion;
a frame enclosing the flap portion and fixed to the back of the periphery of the door portion of the interior panel;
a hinge connecting the flap portion and the frame together, facing the base of the door portion in an open state, and being apart from the base; and
a leg erecting from the inner rim of the frame; wherein
the frame has a cleaving line of at least one of a slit and a tear line extending along at least part of the leg opposite to the hinge; and
the leg has a cleaving-line extending portion connecting to at least one of the ends of the length of the cleaving line.

2. The interior panel assembly according to Claim 1, wherein the cleaving line extends along substantially the entire length of the hinge.

3. The interior panel assembly according to Claim 1, wherein the cleaving-line extending portion connects to both ends of the cleaving line.

4. The interior panel assembly according to Claim 1, wherein the cleaving-line extending portion is provided at the upper part of the leg, and extends in the direction apart from the frame.

5. The interior panel assembly according to Claim 1, wherein the cleaving-line extending portion is a slit.

6. An airbag system comprising:
the interior panel assembly according to Claim 1;
a retainer opposed to the back of the door portion of the interior panel;
an airbag housed in the retainer;
an inflator for inflating the airbag; and
a joint member connecting the retainer and the leg of the door frame together.
